# EUROPEAN PATENT APPLICATION

(11) **EP 4 712 154 A1**
(43) Date of publication of application: **18.03.2026**
(21) Application number: 24843534.9
(22) Date of filing: 18.07.2024
(51) Int. Cl.: H01M 4/13, H01M 4/04, H01M 4/139, H01M 10/052

(54) **ELECTRODE, METHOD FOR PREPARING SAME, AND SECONDARY BATTERY COMPRISING SAME**

(30) Priority: 18.07.2023 KR 20230093423
(71) Applicant: LG Energy Solution, Ltd., Seoul 07335 (KR)
(72) Inventor: CHA, Young-Ho, Daejeon 34122 (KR)
(74) Representative: Plasseraud IP
(86) International application number: PCT/KR2024/010399
(87) International publication number: WO 2025/018820

(57) **Abstract**

Disclosed are an electrode with improved sliding portions, a method for manufacturing the same and a secondary battery including the same, the electrode including a current collector; and an active material layer located on at least one surface of the current collector, wherein the current collector has at least one first surface portion in contact with the active material layer, and a second surface portion located at two sides of the first surface portion, wherein the active material layer is not located at the second surface portion, and wherein a contact angle of water droplet on the first surface portion is smaller than a contact angle of water droplet on the second surface portion,.

## Description

### TECHNICAL FIELD

The present disclosure relates to an electrode, a method for manufacturing the same, and a secondary battery including the same, and more particularly, to an electrode with improved sliding portions at two ends of an active material layer, a method for manufacturing the same, and a secondary battery including the same.

The present application claims the benefit of Korean Patent Application No. 10-2023-0093423 filed on July 18, 2023 with the Korean Intellectual Property Office, the disclosure of which is incorporated herein by reference in its entirety.

### BACKGROUND

With technology development and growing demand for mobile devices, the demand for secondary batteries as a source of energy is dramatically increasing, and many studies are being made to develop batteries that meet the diverse needs.

A secondary battery may be largely divided into a positive electrode, a negative electrode, a separator and an electrolyte, and by the first charge, lithium ions migrate from a positive electrode active material to a negative electrode active material and subsequently, during discharging, deintercalation occurs. In this way, lithium ions move back and forth between the two electrodes. Through this process, the secondary battery is charged and discharged by energy conversion.

The electrode of the lithium secondary battery is generally manufactured by dispersing the active material and a binder to prepare an active material slurry and coating the active material slurry to form an active material layer on one surface of a current collector. A sliding phenomenon in which the active material slurry spreads out occurs when coating the active material slurry on one surface of the current collector. Thus, a sliding portion having a smaller thickness than the central portion is formed at the end of the active material layer. Specifically, the sliding portion is extended from two ends of the central portion and becomes thinner toward the end of the active material layer, i.e., as it goes from the central portion of the active material layer to an uncoated portion in which the active material layer is not formed. Due to the sliding phenomenon, the loading level of the two ends of the active material layer is lower than the loading level of the central portion, and the capacity of the secondary battery is lower than design capacity.

Further, a ratio of the positive electrode and the negative electrode at the uncoated portion (tab portion) of the electrode may reverse due to the sliding portion at the uncoated portion of the electrode end portion, and it is difficult to control the sliding portion, thereby failing to maintain stable electrode quality.

To solve this problem, a variety of seam shapes have been attempted to increase the flow rate of the active material layer forming slurry supplied to two end portions of the active material layer, i.e., side portions. However, due to the increased flow rate of the slurry at the side portions, swelling occurs. It is still a challenge to solve the sliding problem.

### DISCLOSURE

### Technical Problem

The present disclosure is directed to providing an electrode with improved sliding portions at two ends of an active material layer, a method for manufacturing the same, and a secondary battery including the same.

### Technical Solution

To solve the above-described problem, the present disclosure provides an electrode and a method for manufacturing the electrode of the following embodiments.

According to a first embodiment,
there is provided an electrode including a current collector; and
an active material layer located on at least one surface of the current collector,
wherein the current collector has at least one first surface portion in contact with the active material layer, and a second surface portion located at two sides of the first surface portion, wherein the active material layer is not located at the second surface portion, and
wherein a contact angle of water droplet on the first surface portion is smaller than a contact angle of water droplet on the second surface portion.

According to a second embodiment, in the first embodiment,
a difference (B-A) between the contact angle of water droplet (A) on the first surface portion and the contact angle of water droplet (B) on the second surface portion may be 10° or more.

According to a third embodiment, in the first or second embodiment,
the contact angle of water droplet on the first surface portion may range from 19.9° to 39.9°, and the contact angle of water droplet on the second surface portion may range from 50.8° to 70.8°.

According to a fourth embodiment, in any one of the first to third embodiments,
the first surface portion may be surface-treated.

According to a fifth embodiment, in any one of the first to fourth embodiments,
the second surface portions located apart from each other at the two sides of the first surface portion of the current collector may have surface protrusion portions, and the active material layer may be located between the surface protrusion portions spaced apart from each other.

According to a sixth embodiment,
there is provided a method for manufacturing an electrode, including the steps of: preparing a current collector;
forming a first surface portion and a second surface portion at two sides of the first surface portion in a length direction of the current collector, such that a contact angle of water droplet on the first surface portion is controlled to be smaller than a contact angle of water droplet on the second surface portion;
coating an active material layer slurry on the first surface portion; and
drying the active material layer slurry.

According to a seventh embodiment, in the sixth embodiment,
at least one of the first surface portion or the second surface portion of the current collector may be surface-treated.

According to an eighth embodiment, in the sixth or seventh embodiment,
only the first surface portion of the current collector may be surface-treated.

According to a ninth embodiment, in the eighth embodiment,
the coating of the active material layer slurry may be performed at a same location of the surface-treated first surface portion immediately after the surface treatment of the first surface portion.

According to a tenth embodiment, in any one of the seventh to ninth embodiments,
the surface treatment may be performed by plasma, corona, ultraviolet (UV) treatment or Extreme Ultra-Violet (EUV) treatment, or two or more of them.

According to an eleventh embodiment, in any one of the sixth to tenth embodiments,
a difference (B-A) between the contact angle of water droplet (A) on the first surface portion and the contact angle of water droplet (B) on the second surface portion may be 10° or more.

According to a twelfth embodiment, in any one of the sixth to eleventh embodiments,
the contact angle of water droplet on the first surface portion may range from 19.9° to 39.9°, and the contact angle of water droplet on the second surface portion may range from 50.8° to 70.8°.

According to a thirteenth embodiment, in any one of the sixth to twelfth embodiments,
surface protrusion portions present on the second surface portions located at the two sides of the first surface portion of the current collector may be spaced a predetermined distance apart from each other, and may play a role of a dam at two sides of the coated active material layer slurry to prevent the active material layer slurry from flowing down.

According to a fourteenth embodiment,
there is provided a secondary battery including the electrode according to any one of the first to fifth embodiments.

According to a fifteenth embodiment, in the fourteenth embodiment,
the secondary battery may be a lithium secondary battery.

### Advantageous Effects

According to an embodiment of the present disclosure, only the first surface portion of the current collector that will be coated with the active material layer slurry may be surface-treated and the second surface portion that will not be coated with the active material layer slurry may not be surface-treated, so that the contact angle of water droplet on the first surface portion may be controlled to be smaller than the contact angle of water droplet on the second surface portion, and in this instance, the second surface portion may be located at each of two sides of the first surface portion to improve the sliding portions of the electrode formed at the uncoated portions of two end portions of the electrode due to the spreading phenomenon of the active material layer slurry by wet coating, thereby preventing the reversal phenomenon of capacity balance (N/P balance) of the positive electrode and the negative electrode. Additionally, it may be possible to suppress Li precipitation at the sliding portion and improve the cycling characteristics of the secondary battery using the electrode. Additionally, according to an embodiment of the present disclosure, it may be possible to reduce the physical distance between the positive electrode layer and the negative electrode layer, thereby preventing the concentration gradient of lithium ions between the positive electrode and the negative electrode, i.e., electrolyte concentration polarization, and reducing the overvoltage site.

### BRIEF DESCRIPTION OF THE DRAWINGS

The accompanying drawings illustrate an exemplary embodiment of the present disclosure and together with the foregoing description, serve to provide a better understanding of the technical aspect of the present disclosure, and thus, the present disclosure is not construed as being limited to the drawings.
FIG. 1 is a cross-sectional view of a conventional current collector.
FIG. 2 is a diagram showing a process of coating an active material layer slurry on one surface of a conventional current collector.
FIG. 3 is a diagram showing a slurry coated on one surface of a conventional current collector.
FIG. 4 is a diagram showing a comparison between hydrophilic and hydrophobic by the contact angle of water droplet.
FIG. 5 is a cross-sectional view of a current collector according to an embodiment of the present disclosure.
FIG. 6 is a top view of a current collector according to an embodiment of the present disclosure.
FIG. 7 is a diagram showing a process of coating an active material layer slurry on one surface of a current collector according to an embodiment of the present disclosure.
FIG. 8 is a diagram showing a slurry coated on one surface of a current collector according to an embodiment of the present disclosure.
FIG. 9 is a diagram showing a sliding portion of an electrode according to an embodiment of the present disclosure.
FIG. 10 is a graph showing a result of evaluating sliding portion lengths of electrodes manufactured in Example 1 and Comparative Example 1.

### BEST MODE

Hereinafter, the present disclosure is described in detail with reference to the accompanying drawings. It should be understood that the terms or words used in the specification and the appended claims should not be construed as limited to general and dictionary meanings, but rather interpreted based on the meanings and concepts corresponding to the technical aspect of the present disclosure on the basis of the principle that the inventor is allowed to define the terms appropriately for the best explanation.

In the case of the conventional electrode, because wet coating is performed on a current collector, a sliding portion is inevitably formed at two end portions of a wet-coated active material layer due to a slurry spreading phenomenon, and this involves a reversal phenomenon of capacity balance (N/P balance) between the positive electrode and the negative electrode in an electrochemical device using the electrode having the sliding portion, resulting in Li precipitation and degradation of the electrochemical device.

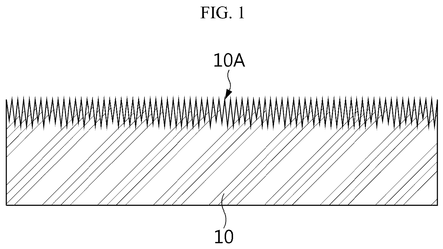

FIG. 1 is a cross-sectional view of the conventional current collector 10, and because any treatment process is not performed, a surface 10A of the current collector 10 may have a surface microprotrusion portion.

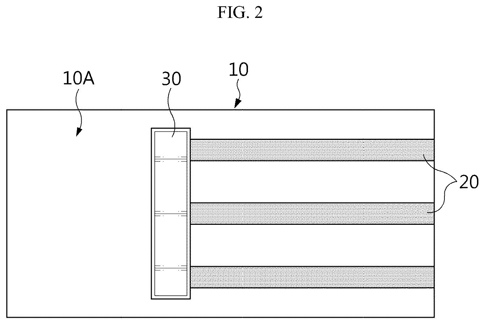

FIG. 2 is a diagram showing a process of coating an active material layer slurry on one surface of the conventional current collector 10 by using a slurry coater 30 (for example, a slot die) to form a slurry layer 20, and in this instance, the surface 10A of the conventional current collector 10 may have the surface microprotrusion portion as described above.

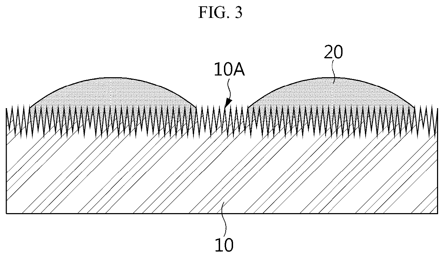

Referring to FIG. 3, the active material layer slurry in liquid state is coated on the surface protrusion portion 10A present on one surface of the conventional current collector 10, and in this instance, the slurry tends to spread in all directions by the influence of the gravity, and as a result, the sliding portion having a smaller thickness than the central portion is formed at two end portions of the active material layer of the final electrode manufactured from the slurry in dry state spread in all directions. By the presence of the sliding portions at the two end portions of the active material layer, the loading level of two ends of the active material layer is lower than the loading level of the central portion, causing performance degradation of the secondary battery such as lower capacity of the secondary battery than the design capacity.

To solve the problem of the conventional electrode, the present disclosure provides an electrode including:
a current collector; and
an active material layer located on at least one surface of the current collector,
wherein the current collector has at least one first surface portion in contact with the active material layer, and a second surface portion located at two sides of the first surface, wherein the active material layer is not located at the second surface portion, and
wherein a contact angle of water droplet on the first surface portion is smaller than a contact angle of water droplet on the second surface portion.

That is, the present disclosure forms two surface portions having different contact angles of water droplet in a predetermined area of the surface portion of the current collector through surface treatment, to control the property of the slurry that spreads in all directions on the current collector, thereby solving the sliding portion problem at two end portions of the active material layer.

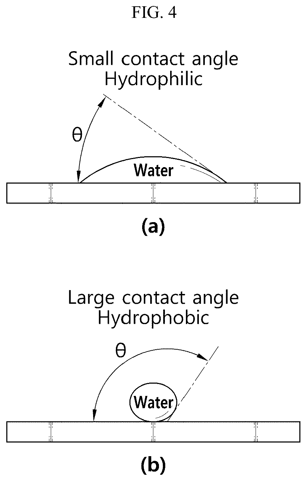

In general, a solid such as a metal or a polymer has unique surface energy on its surface, and the surface energy may be evaluated by measuring the contact angle of water droplet. On the solid surface, when a straight line from a point of contact between a stationary water droplet and the solid to the water droplet surface is drawn, an angle between the straight line and the solid surface is referred to as the contact angle of water droplet. Referring to FIG. 4, as the contact angle of water droplet θ is smaller, the water droplet of a spherical shape loses the shape on the solid surface and gets the solid surface wet, and in this instance, the surface of the solid is called hydrophilic. On the contrary, when the contact angle is large, the water droplet maintains the spherical shape and does not get the solid surface wet, and the surface of the solid is called hydrophobic.

In the specification, the contact angle of water droplet refers to an angle between water on the surface of the current collector and the surface of the current collector where they meet. The first surface portion of the current collector having a small contact angle of water droplet represents that the first surface portion of the current collector has high wettability (hydrophilicity) and high surface energy, and on the contrary, the second surface portion of the current collector having a large contact angle of water droplet represents that the second surface portion of the current collector has low wettability (hydrophobicity) and low surface energy.

In the present disclosure, the contact angle of water droplet may be measured by measuring the contact angle formed by dropping distilled water onto the corresponding current collector surface in 23°C, 50% RH conditions by a contact angle meter (for example, model CA-DT-A(mfd. Kyowa Kaimen Kagaku KK)). Specifically, the contact angle may be measured at two points (left and right points) of each of three current collector samples, and the average of six measurements may be determined as the contact angle of water droplet. The droplet of distilled water may be 2 mm in diameter, and the contact angle displayed on the meter may be a value measured 1 minute after dropping the distilled water.

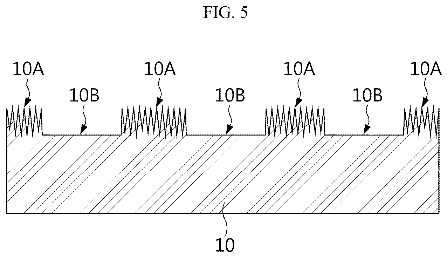

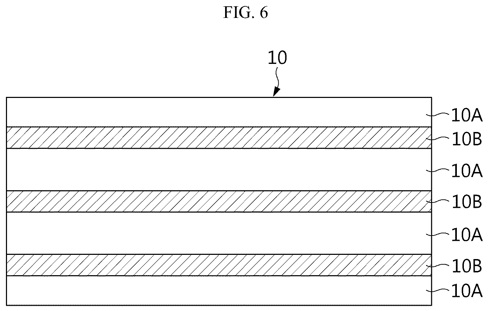

Referring to FIGs. 5 and 6, the current collector 10 according to an embodiment of the present disclosure has at least one first surface portion 10B on the surface, and the second surface portion 10A located at two sides of the first surface. In this instance, the contact angle of water droplet on the first surface portion is smaller than the contact angle of water droplet on the second surface portion.

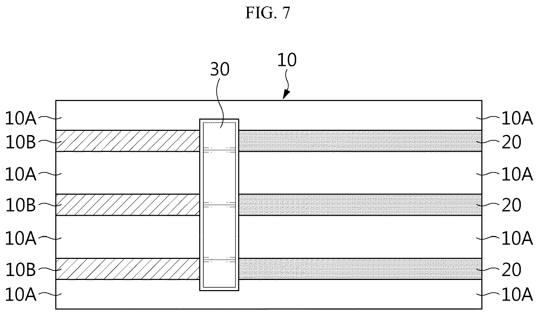

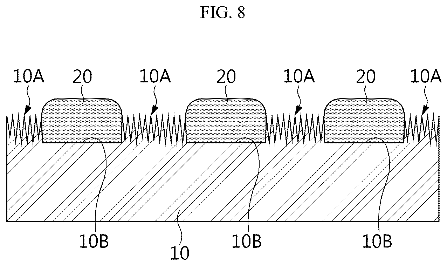

Referring to FIGs. 7 and 8, a slurry layer 20 is formed on one surface of the current collector 10 according to an embodiment of the present disclosure by only coating the active material layer slurry on the first surface portion 10B located between the second surface portions 10A by using the slurry coater 30 (for example, the slot die).

In this instance, in FIG. 8, the surface protrusion portion of the second surface portion 10A located at two sides of the first surface portion 10B may play as role of a sort of dam (barrier) to prevent the slurry layer 20 located on the first surface portion 10B from spreading in two directions any longer, thereby minimizing a thickness difference between the central portion of the slurry layer and two end portions extended from the central portion. As a result, it may be possible to prevent the phenomenon of the sliding portion involving a big reduction in thickness of the two ends compared to the thickness of the central portion of the active material layer in the active material layer obtained by drying the slurry layer later.

Accordingly, the electrode according to an embodiment of the present disclosure may have the surface protrusion portion on the second surface portions located apart from each other at two sides of the first surface portion of the current collector, and the active material layer may be located between the surface protrusion portions spaced apart from each other.

In this instance, the surface protrusion portion refers to an uneven ( 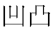 ) portion of the surface.

The degree of unevenness of the surface protrusion portion of the current collector may be analyzed by measuring surface roughness.

According to an embodiment of the present disclosure, the surface roughness of the surface protrusion portion may be measured using an optical meter. For example, the optical meter (SHINREIN's SRN2515) is designed to measure the surface roughness while taking an enlarged image of a target surface, and specifically, the surface roughness Rz of the target surface is determined by taking an enlarged image of the target surface while moving from an end to the other end of the surface in the width direction, and calculating a height difference between the highest peak and the lowest peak within the movement distance.

In the specification, the sliding portion of the electrode may be defined as a region that is extended from two ends of the central portion of the active material layer and gradually decreases in thickness toward the end of the active material layer, that is, as it goes from the central portion of the active material layer to the uncoated portion in which the active material layer is not formed.

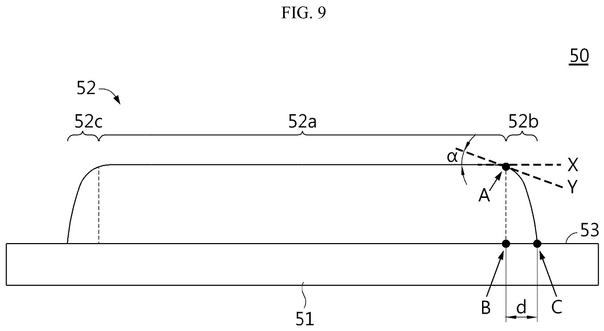

Referring to FIG. 9, the electrode 50 of an embodiment of the present disclosure includes the current collector 51; and the electrode layer 52 located on at least one surface of the current collector 51 and the uncoated portion 53 having no electrode layer, and the vertical cross section of the electrode layer 52 has the electrode layer central portion 52a and the end portion (the sliding portion) 52b, 52c extended from each of two sides of the electrode layer central portion 52a and in which the electrode layer central portion decreases in electrode layer height and contacts the current collector.

In this instance, the end portion length d of the electrode layer refers to a distance between a point B on the current collector 51 vertically below a slope starting point A and a boundary point C at which the end portion of the electrode layer and the current collector meet, and the slope starting point A is a location on the end portion at which an acute angle α formed by an extended line X of the electrode layer central portion and a tangent line Y on the end portion along the end portion extended from the central portion is 10° or more for the first time. That is, the slope starting point A refers to a location on the end portion at which the acute angle α is 10° or more for the first time when measuring the acute angle α formed by the extended line X of the electrode layer central portion and the tangent line Y at a random location on the end portion, starting from an random location on the end portion at which the electrode layer start to decrease in height below the electrode layer central portion and along a direction toward the boundary point C. When the electrode layer decreases in height and contacts the current collector in a curved shape along the perimeter line of the vertical cross section of the end portion, the location on the end portion at which the acute angle α is 10° or more for the first time can be found while continuously changing the random location on the end portion. In contrast, when the electrode layer decreases in height and contacts the current collector in a diagonal or vertical line shape having a predetermined angle of 10° or more along the perimeter line of the vertical cross section of the end portion, the starting point of the diagonal or vertical line shape may be the location on the end portion at which the acute angle α is 10° or more for the first time.

Additionally, according to an embodiment of the present disclosure, the sliding portion length (the end portion length) of the electrode layer may be defined as a length of a region having a thickness of 90% or less of the average thickness of the active material layer.

In this instance, the sliding portion length may be measured using a laser thickness meter (SNU). Compared to the conventional electrode using the untreated current collector, the electrode according to an embodiment of the present disclosure manufactured using the current collector surface-treated on the first surface portion may have the sliding portion length reduced by 30% or less, or 5% to 30%, or 5% to 23%.

The end portion length (the sliding portion length) of the electrode layer of the present disclosure may be 10 mm or less, and according to an embodiment of the present disclosure, the electrode layer end portion length may range from 1 mm to 10 mm, or from 1.2 mm to 7 mm, or from 1.7 mm to 7 mm, or from 1.7 mm to 10 mm.

When the end portion of the electrode layer satisfies the aforementioned range, it may be possible to prevent the reversal phenomenon of capacity balance (N/P balance) of the positive electrode and the negative electrode, suppress Li precipitation by calculating the electrolyte concentration at the sliding portion, prevent overvoltage of the secondary battery using the electrode, improve the cycling characteristics, and improve the adhesion strength between the end portion side electrode and the separator.

According to an embodiment of the present disclosure, a difference (B-A) between the contact angle of water droplet A on the first surface portion and the contact angle of water droplet B on the second surface portion may be 10° or more, or from 10° to 30°, or from 30° to 50°. When the difference (B-A) between the contact angle of water droplet A on the first surface portion and the contact angle of water droplet B on the second surface portion lies in the aforementioned range, the second surface portion may play a role of a dam to effectively prevent the spreading phenomenon of the slurry coated on the first surface portion at two sides of the first surface portion and suppress the slurry spreading phenomenon.

Specifically, the contact angle of water droplet on the first surface portion may range from 19.9° to 39.9°, or from 30° to 50°, and the contact angle of water droplet on the second surface portion may range from 50.8° to 70.8°, or from 80° to 90°.

According to an embodiment of the present disclosure, the first surface portion of the current collector may be a surface-treated one. In this instance, the surface treatment may be performed by any treatment process for making the contact angle of water droplet smaller than the untreated second surface portion. The treatment process may include, for example, corona treatment, plasma treatment, UV treatment, Extreme Ultra-Violet (EUV) treatment, but not limited thereto. One of them may be used, or two or more of them may be used in combination.

In the present disclosure, the electrode may be positive or negative, and the active material layer may be a positive electrode active material layer or a negative electrode active material layer.

For example, when the electrode is positive, the active material included in the positive electrode active material layer is a positive electrode active material, and may include lithium-containing oxide, preferably lithium-containing transition metal oxide. For example, the lithium-containing transition metal oxide may include any one selected from the group consisting of Liₓ(NiₐCo_{b}Mn_{c})O₂(0.5<x<1.3, 0<a<1, 0<b<1, 0<c<1, a+b+c=1), LiₓFePO₄(0.5<x<1.3), LiₓCoO₂(0.5<x<1.3), LiₓNiO₂(0.5<x<1.3), LiₓMnO₂(0.5<x<1.3), LiₓMn₂O₄(0.5<x<1.3), LiₓNi_{1-y}Co_{y}O₂(0.5<x<1.3, 0<y<1), LiₓCo_{1-y}Mn_{y}O₂(0.5<x<1.3, 0≤y<1), LiₓNi_{1-y}Mn_{y}O₂(0.5<x<1.3, 0≤y<1), Liₓ(NiₐCo_{b}Mn_{c})O₄(0.5<x<1.3, 0<a<2, 0<b<2, 0<c<2, a+b+c=2), LiₓMn_{2-z}Ni_{z}O₄(0.5<x<1.3, 0<z<2), LiₓMn_{2-z}Co_{z}O₄(0.5<x<1.3, 0<z<2) and LiₓCoPO₄(0.5<x<1.3) or a mixture thereof, and the lithium-containing transition metal oxide may be coated with metal such as aluminum (Al) or metal oxide. Additionally, in addition to the lithium-containing transition metal oxide, sulfide, selenide and halide may be used.

For example, when the electrode is negative, the negative electrode active material included in the active material layer may include carbon such as nongraphitizing carbon or graphite-based carbon; metal composite oxide such as LiₓFe₂O₃(0<x≤1), LiₓWO₂(0<x≤1), SnₓMe₁₋ₓMe'_{y}O_{z} (Me: Mn, Fe, Pb, Ge; Me': Al, B, P, Si, Groups 1, 2 and 3 elements in the periodic table, halogen; 0<x≤1; 1≤y≤3; 1≤z≤8); lithium metals; lithium alloys; silicon-based alloys; tin-based alloys; silicon-based oxide such as SiO, SiO/C, SiO₂; metal oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄ and Bi₂O₅; conductive polymer such as polyacetylene; Li-Co-Ni based materials.

The electrode according to an embodiment of the present disclosure may include the current collector; and the active material layer on at least one surface of the current collector, formed by applying the active material slurry including the active material, a conductive material and a binder, and the uncoated portion having no active material layer.

According to an embodiment of the present disclosure, the electrode may be positive, and the active material may be a positive electrode active material. In this case, the positive current collector may be generally about 3 *µ*m to 50 *µ*m in thickness. The positive current collector is not limited to a particular type and may include those having high conductivity without causing any chemical change to the corresponding battery, and may include, for example, stainless steel, aluminum, nickel, titanium, sintered carbon, or aluminum or stainless steel treated with carbon, nickel, titanium or silver on the surface. The positive current collector may have microtexture on the surface to increase the adhesion strength of the positive electrode active material, and may come in various forms, for example, a film, a sheet, a foil, a net, a porous body, a foam or a nonwoven. Additionally, in the present disclosure, the conductive material included in the first active material layer and the second active material layer is generally added in an amount of from 0.2 wt% to 5 wt% based on the total weight of the mixture including the positive electrode active material. The conductive material is not limited to a particular type and may include any material having conductive properties without causing any chemical change to the corresponding battery, and may include, for example, graphite such as natural graphite or artificial graphite; carbon black such as carbon black, acetylene black, Ketjen black, channel black, furnace black, lamp black, thermal black; conductive fibers such as carbon fibers or metal fibers; fluorocarbon; metal powder such as aluminum or nickel powder; conductive whiskers such as zinc oxide whiskers or potassium titanate whiskers; conductive metal oxide such as titanium oxide; conductive materials such as polyphenylene derivatives. Additionally, in the present disclosure, the binder included in the active material layer is the component that helps the binding of the active material to the conductive material and to the current collector, and is generally added in an amount of from 0.2 wt% to 5 wt% based on the total weight of the slurry including the positive electrode active material. Examples of the binder may include polyvinylidene fluoride, polyvinyl alcohol, carboxymethyl cellulose (CMC), starch, hydroxypropyl cellulose, regenerated cellulose, polyvinyl pyrrolidone, tetrafluoroethylene, polyethylene, polypropylene, ethylene-propylene-diene terpolymer (EPDM), sulfonated EPDM, styrene-butadiene rubber, fluorine rubber, a variety of copolymers.

For example, when the electrode is negative, the negative current collector is not limited to a particular type and may include those having high conductivity without causing any chemical change to the battery, and may include, for example, copper, stainless steel, aluminum, nickel, titanium, sintered carbon, copper or stainless steel treated with carbon, nickel, titanium or silver on the surface, aluminum-cadmium alloys. Additionally, the negative current collector may be generally about 3 *µ*m to 50 *µ*m in thickness, and in the same way as the positive current collector, the current collector may have microtexture on the surface to increase the bond strength of the negative electrode active material. For example, the negative current collector may come in various forms, for example, a film, a sheet, a foil, a net, a porous body, a foam or a nonwoven. Additionally, the conductive material and the binder included in the active material layer may be the same as those of the positive electrode.

According to an aspect of the present disclosure,
there is provided a method for manufacturing the electrode, including the steps of: preparing the current collector;
forming the first surface portion and the second surface portion located at two sides of the first surface portion in the length direction of the current collector, such that the contact angle of water droplet on the first surface portion is controlled to be smaller than the contact angle of water droplet on the second surface portion;
coating the active material layer slurry on the first surface portion; and
drying the active material layer slurry.

First, the current collector is prepared.

For details of the current collector, reference may be made to the foregoing description.

Subsequently, the first surface portion and the second surface portion located at two sides of the first surface portion are formed in the length direction of the current collector such that the contact angle of water droplet on the first surface portion is controlled to be smaller than the contact angle of water droplet on the second surface portion.

The surface treatment may be performed by any treatment process for making the contact angle of water droplet smaller than the untreated second surface portion. The treatment process may include, for example, corona treatment, plasma treatment, UV treatment, Extreme Ultra-Violet (EUV) treatment, or two or more of them. In this instance, one of these treatment processes may be used, or two or more of them may be used in combination.

According to an embodiment of the present disclosure, to control the contact angle of water droplet on the first surface portion to be smaller than the contact angle of water droplet on the second surface portion, at least one of the first surface portion or the second surface portion may be surface-treated. Only the first surface portion of the current collector may be surface-treated.

Subsequently, the active material layer slurry is coated on the first surface portion.

According to an embodiment of the present disclosure, when surface-treating only the first surface portion of the current collector, immediately after the surface treatment of the first surface portion, the step of coating the active material layer slurry may be performed at the same location of the surface-treated first surface portion.

For example, a surface treatment machine (plasma, corona machine, etc.) for surface treatment of a predetermined area of the surface of the current collector may be installed immediately before a coater of the active material layer slurry to surface-treat the same shape and the same location as the slurry coating area, in order to control the contact angle of the predetermined area of the surface of the current collector, and subsequently, the slurry may be coated at the same location, to prevent the active material layer from sliding due to the spreading phenomenon of the slurry.

A coating method of the slurry may include, for example, roll-to-roll coating, spin coating, nozzle printing, inkjet printing, slot coating.

According to an embodiment of the present disclosure, after the active material layer slurry is coated on the first surface portion, the surface protrusion portions present on the second surface portion located at two sides of the first surface portion of the current collector may be spaced a predetermined distance apart from each other, and play a role of a dam at two sides of the coated active material layer slurry to prevent the active material layer slurry from flowing down (see FIG. 8).

Subsequently, the active material layer slurry is dried.

The active material layer may be formed by evaporation of the solvent included in the active material layer slurry through the drying. The drying temperature may be, for example, 30°C or more, 40°C or more or 45°C or more, and 200°C or less, 180°C or less or 160°C or less, or from 80°C to 170°C, or from 80°C to 160°C. Additionally, the drying may be performed in a dryer controlled to a single temperature, and may be performed in a dryer controlled to multiple drying stages of two or more different temperatures. For example, the multiple drying stages may include a first drying stage controlled between 80°C and 100°C, a second drying stage controlled between 100°C and 150°C, and a third drying stage controlled between 150°C and 160°C.

Additionally, the drying may be performed by placing the current collector coated with the active material layer slurry in the dryer, and may be performed by passing the current collector coated with the active material layer slurry through the dryer at a predetermined speed. When the drying is performed through the multiple drying stages, the time required for the current collector coated with the active material layer slurry to pass through each drying stage at a constant movement speed may be controlled to be equal or different.

Additionally, the formed active material layer may be rolled.

The rolling process may include any process commonly performed in the electrode without limitation. The thickness of the electrode layer may be controlled to a desired level through the rolling process.

According to an aspect of the present disclosure, there is provided a secondary battery including a positive electrode, a negative electrode and a separator between the positive electrode and the negative electrode, wherein at least one of the positive electrode or the negative electrode is the above-described electrode according to an embodiment of the present disclosure.

The separator that will be used with the electrode of the present disclosure is not limited to a particular type. The separator is interposed between the positive electrode and the negative electrode to separate the positive electrode from the negative electrode, and an insulating thin film having high ion permeability and mechanical strength is used as the separator. Any type of separator commonly used in secondary batteries may be used without limitation. Specifically, for example, porous polymer films made of polyolefin-based polymer such as ethylene homopolymer, propylene homopolymer, ethylene/butene copolymer, ethylene/hexene copolymer or ethylene/methacrylate copolymer or a stack of two or more layers of them may be used. The commonly used porous nonwoven fabrics, for example, nonwoven fabrics made of high melting point glass fibers or polyethylene terephthalate fibers may be also used.

Additionally, to ensure heat resistance or mechanical strength, the separator coated with inorganic particles, a binder polymer, or a mixture of the inorganic particles and the binder polymer may be used, and may be selectively used with a monolayer or multilayer structure. Further, when a solid electrolyte such as polymer is used as the electrolyte, the solid electrolyte may act as the separator.

In the present disclosure, the secondary battery may be a lithium secondary battery including a lithium metal secondary battery, a lithium ion secondary battery, a lithium polymer secondary battery or a lithium ion polymer secondary battery.

Hereinafter, the embodiments will be described in detail to particularly describe the present disclosure. However, the embodiments according to the present disclosure may be modified in many different forms, and the scope of the present disclosure should not be interpreted as being limited to the following embodiments. The embodiments of the present disclosure are provided to describe the present disclosure to those skilled in the art thoroughly and completely.

### Example 1

### (1) Surface treatment of current collector

A current collector surface (a first surface portion) that will be coated with an electrode slurry on a 10 *µ*m thick copper current collector in motion through a roll-to-roll process has undergone plasma surface treatment using a plasma machine in single treatment conditions of 800w and 100 mm/s to remove a surface protrusion portion formed on the surface of the current collector. As a result, the contact angle of the current collector surface before the surface treatment was 60.8°, while the contact angle of the first surface portion after the surface treatment was 29.9°. Accordingly, a different (B-A) between the contact angle of water droplet A (29.9°) on the first surface portion and the contact angle of water droplet B (60.8°) on the second surface portion (the current collector surface before the surface treatment) was 30.9°.

### (2) Preparation of active material layer slurry

300 parts by weight of lithium nickel cobalt manganese aluminum oxide (NCMA, Li[Ni_{0.87}Co_{0.05}Mn_{0.07}Al_{0.01}]O₂)) as a positive electrode active material, 0.7 parts by weight of carbon black as a conductive material, and 1.56g of polyvinylidenefluoride (PVDF) as a binder were fed into a mixer together with N-methyl pyrrolidone (NMP) as a dispersion medium and they were mixed at 30,000 rpm for 60 minutes to prepare an active material layer slurry (Solid content of the prepared slurry was 70%).

### (3) Manufacture of electrode (positive electrode)

The as-prepared active material layer slurry was coated on the first surface portion of the current collector in which the surface protrusion portion was removed by the plasma surface treatment using a slot die coater.

The current collector coated with the active material layer slurry was allowed to pass through an oven in which the temperature between 80°C and 160°C was controlled in multiple stages to dry the solvent in the slurry, to manufacture an electrode having an active material layer on the first surface portion of the current collector. Specifically, the oven includes a first drying stage controlled between 80°C and 100°C, a second drying stage controlled between 100°C and 150°C, and a third drying stage controlled between 150°C and 160°C. The time required for the current collector coated with the active material layer slurry to pass through each drying stage was 0 sec in the first drying stage, 60 sec in the second drying stage, and 30 sec in the third drying stage, and the speed was 40 m/min. In this instance, the thickness of the active material layer formed on the current collector was 200 *µ*m.

### Comparative Example 1

An electrode was manufactured by the same method as Example 1 except that an untreated current collector was used.

### Evaluation experiment

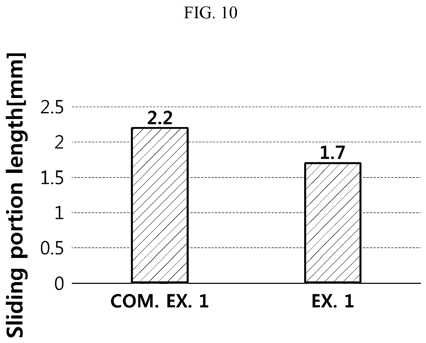

The sliding portion lengths of the electrodes manufactured in Example 1 and Comparative Example 1 were measured using a laser thickness meter (SNU), and the results are shown in FIG. 10.

In this instance, the sliding portion length was defined as a length of a region having a thickness of 90% or less of the average thickness of the active material layer.

Referring to FIG. 10, compared to the conventional electrode of Comparative Example 1 using the untreated current collector, the electrode of Example 1 manufactured using the current collector, in which only the first surface portion was surface-treated, had the sliding portion length reduced by about 23% level.

## Claims

1. An electrode comprising:
a current collector; and
an active material layer located on at least one surface of the current collector,
wherein the current collector has at least one first surface portion in contact with the active material layer, and a second surface portion located at two sides of the first surface portion, wherein the active material layer is not located at the second surface portion, and
wherein a contact angle of water droplet on the first surface portion is smaller than a contact angle of water droplet on the second surface portion.

2. The electrode according to claim 1,
wherein a difference (B-A) between the contact angle of water droplet (A) on the first surface portion and the contact angle of water droplet (B) on the second surface portion is 10° or more.

3. The electrode according to claim 1,
wherein the contact angle of water droplet on the first surface portion ranges from 19.9° to 39.9°, and the contact angle of water droplet on the second surface portion ranges from 50.8° to 70.8°.

4. The electrode according to claim 1,
wherein the first surface portion is surface-treated.

5. The electrode according to claim 1,
wherein the second surface portions located apart from each other at the two sides of the first surface portion of the current collector have surface protrusion portions, and the active material layer is located between the surface protrusion portions spaced apart from each other.

6. A method for manufacturing an electrode, comprising the steps of:
preparing a current collector;
forming a first surface portion and a second surface portion at two sides of the first surface portion in a length direction of the current collector, such that a contact angle of water droplet on the first surface portion is controlled to be smaller than a contact angle of water droplet on the second surface portion;
coating an active material layer slurry on the first surface portion; and
drying the active material layer slurry.

7. The method for manufacturing the electrode according to claim 6,
wherein at least one of the first surface portion or the second surface portion of the current collector is surface-treated.

8. The method for manufacturing the electrode according to claim 6,
wherein only the first surface portion of the current collector is surface-treated.

9. The method for manufacturing the electrode according to claim 8,
wherein the coating of the active material layer slurry is performed at a same location of the surface-treated first surface portion immediately after the surface treatment of the first surface portion.

10. The method for manufacturing the electrode according to claim 7,
wherein the surface treatment is performed by a plasma, corona, ultraviolet (UV) or Extreme Ultra-Violet (EUV) treatment process or two or more of them.

11. The method for manufacturing the electrode according to claim 6,
wherein a difference (B-A) between the contact angle of water droplet (A) on the first surface portion and the contact angle of water droplet (B) on the second surface portion is 10° or more.

12. The method for manufacturing the electrode according to claim 6,
wherein the contact angle of water droplet on the first surface portion ranges from 19.9° to 39.9°, and the contact angle of water droplet on the second surface portion ranges from 50.8° to 70.8°.

13. The method for manufacturing the electrode according to claim 6,
wherein surface protrusion portions present on the second surface portions located at the two sides of the first surface portion of the current collector are spaced a predetermined distance apart from each other, and play a role of a dam at two sides of the coated active material layer slurry to prevent the active material layer slurry from flowing down.

14. A secondary battery comprising the electrode according to any one of claims 1 to 5.

15. The secondary battery according to claim 14,
wherein the secondary battery is a lithium secondary battery.
